# EUROPÄISCHE PATENTSCHRIFT

(11) **EP 1 878 100 B1**
(45) Veröffentlichungstag und Bekanntmachung des Hinweises auf die Patenterteilung: **27.10.2010**
(21) Anmeldenummer: 06742785.6
(22) Anmeldetag: 04.05.2006
(51) Int. Cl.: H02H 3/087, H01H 9/54

(54) **SCHUTZSCHALTERSYSTEM**
CIRCUIT BREAKER SYSTEM
SYSTEME DISJONCTEUR DE PROTECTION

(30) Priorität: 06.05.2005 DE 202005007220 U
(43) Veröffentlichungstag der Anmeldung: 16.01.2008
(73) Patentinhaber: Ellenberger & Poensgen GmbH, D-90518 Altdorf (DE)
(72) Erfinder: ZÖLS, Fred, 90592 Schwarzenbruck (DE)
(74) Vertreter: Tergau & Pohl Patentanwälte
(86) Internationale Anmeldenummer: PCT/EP2006/004148
(87) Internationale Veröffentlichungsnummer: WO 2006/119906

(56) Entgegenhaltungen:
- EP-A- 1 186 086

## Beschreibung

Die Erfindung bezieht sich auf ein Schutzschaltersystem mit einem Schalter, insbesondere einem steuerbaren Leistungshalbleiter zum Schalten einer Last.

In Bordnetzen, beispielsweise von Kraft- oder Luftfahrzeugen, treten zunehmend elektronische Komponenten zum ein- und ausschalten von Verbrauchen in den Vordergrund. Hierzu werden insbesondere steuerbare Schalter in Form von Leistungshalbleitern zum Schalten einer oder mehrerer Lasten bzw. Verbraucher eingesetzt. Derartige elektronische Schalter sind jedoch nicht absolut fehlersicher. So können grundsätzlich zwei mögliche Fehlerzustände auftreten, nämlich eine Unterbrechung, bei der der Hauptpfad (source und drain) isoliert ist, oder aber eine Durchlegierung, bei der der Hauptpfad kurzgeschlossen ist. Je nach auftretendem Fehlerzustand ist demzufolge eine angeschlossene Last entweder stets ausgeschaltet oder aber stets eingeschaltet.

Der Erfindung liegt die Aufgabe zugrunde, ein Schutzschaltersystem der eingangs genannten Art anzugeben, das ein Schalten einer Last auch bei einer kritischen Anwendung, insbesondere auch bei einem defekten elektronischen Schalter, ermöglicht.

Diese Aufgabe wird erfindungsgemäß gelöst durch die Merkmale des Anspruchs 1. Dazu ist ein Schutzschaltersystem mit einem vorzugsweise steuerbaren Schalter, insbesondere in Form eines Leistungshalbleiters, vorgesehen, der zum Schalten einer Last innerhalb eines Strompfades zwischen einen Spannungseingang und einen Lastausgang geschaltet ist. Ein zusätzlicher Schutzschalter ist zwischen einer ersten Steckposition und einer zweiten Steckposition umsteckbar. Dabei ist in der ersten Steckposition der Schutzschalter mit dem steuerbaren Schalter in Reihe geschaltet, während in der zweiten Steckposition der Schutzschalter dem vorzugsweise elektronischen Schalter parallelgeschaltet ist.

In der ersten Steckposition, bei der der Schutzschalter mit dem Schalter eine Reihenschaltung bildet, dient der Schutzschalter zweckmäßigerweise als Überstromschutz für den Schalter und/oder für die Last. Ein Überstromschutz ist somit auch für den Fall gegeben, wenn der Schalter im Fehlerfall durchlegiert und somit kurzgeschlossen ist.

Die erste Steckposition des Schutzschalters innerhalb des nachfolgend auch als Hauptstrompfad bezeichneten Strompfades kann versorgungs- oder lastseitig des Schalters vorgesehen sein. Im erstgenannten Fall ist dann ein die erste Steckposition bevorzugt bildender Stecksockel dem Schalter vorgeschaltet. Im zweitgenannten Fall ist der die erste Steckposition bildende Stecksockel dem Schalter nachgeschaltet.

In der zweiten Steckposition ermöglicht der Schutzschalter die Stromversorgung der Last oder eines Verbrauchers für den Fall, dass der Schalter infolge einer Unterbrechung eine Stromversorgung über den Hauptstrompfad nicht mehr ermöglicht oder sicherstellt. Ein die zweite Steckposition bildender Stecksockel ist zweckmäßigerweise parallel zum Schalter zwischen den Spannungseingang und den Spannungsausgang geschaltet. Dabei bildet dieser zweite Stecksockel einen Bypass-Strompfad zum Hauptstrompfad für den Fall, dass der Schutzschalter in diesen die zweite Steckposition bildenden Stecksockel eingesteckt ist.

Die Stecksockel sind dabei zweckmäßigerweise als Flachsockel nach Art eines in Bordnetzen üblichen Flachsicherungssockels ausgeführt. Dementsprechend ist dann auch der Schutzschalter in Flachsteckerausführung mit zwei Flachsteckern ausgeführt, die innerhalb eines Schaltergehäuses über ein thermisches Auslöseelement, insbesondere in Form eines schnappscheibenartigen Bimetalls, überbrückt und dabei elektrisch leitend miteinander verbunden sind. Das Bimetall ist dabei an einem der beiden Flachstecker fixiert und mit dem anderen Flachstecker in kontaktierender Überdeckungsstellung. Im Überstrom- oder Kurzschlussfall erfolgt oberhalb einer vorgebbaren Stromschwelle eine thermische Auslösung des dann als Überstromschutzschalter wirksamen Schutzschalters, indem durch ein Aufbiegen des Bimetalls die Überdeckungsstellung mit dem entsprechenden Flachstecker geöffnet und somit dekontaktiert wird.

Ein derartiger Überstromschutzschalter ist aus der DE 198 56 707 A1 und aus der EP 1 151 692 A2 bekannt. Bei den hieraus bekannten Überstromschutzschaltern handelt es sich um manuell betätigbare oder druckknopfbetätigte Überstromschutzschalter, bei denen im Auslösefall in den Überdeckungsbereich zwischen dem Bimetall und dem entsprechenden Flachstecker ein federbelasteter Isolierschieber einfährt, der über den Druckknopf manuell wieder in dessen Ausgangsposition verschoben werden kann. Anstelle dieses druckknopfbetätigten Überstromschutzschalters kann auch ein druckknopf- und/oder schieberloser Überstromschutzschalter als Schutzschalter eingesetzt werden.

Der Schalter ist zweckmäßigerweise ein schaltender Halbleiter, insbesondere ein MOS-Feldeffekttransistor (MOSFET). Der Schalter kann auch ein so genannter IGBT (Insulated Gate Bipolar Transistor) oder ein Darlington Transistor sein. Dieser schaltende Halbleiter wird zweckmäßigerweise innerhalb des Schutzschaltersystems mittels einer Steuereinrichtung angesteuert. Dazu weist die Steuereinrichtung einen Steuerausgang auf, der an das Gate des als Leistungshalbleiter ausgeführten Schalters geführt ist.

Die Steuereinrichtung weist in vorteilhafter Ausgestaltung eine BUS-Schnittstelle auf. Auch kann der den Schalter bildende Leistungsschalter direkt über eine BUS-Schnittstelle eines BUS-Systems, wie beispielsweise den CAN-BUS (controller area network), gesteuert werden.

Das Schutzschaltersystem eignet sich daher auch in einem Stromverteilungssystem mit einer Anzahl von Stromkreisen. Ein derartiges Stromverteilungssystem, das bevorzugt in einem DC-Niederspannungsnetz einsetzbar ist, ist an sich insbesondere aus der EP 1 186 086 B1, gemäß dem Oberbegriff des Anspruchs 1, bekannt. Wird nun in einem solchen Stromverteilungssystem jedem Stromkreis ein derartiges erfindungsgemäßes Schutzschaltersystem zugeordnet, so ist mittels des umsteckbaren Schutzschalters eine zusätzliche Sicherung als Not-Schaltung für die mittels des Schalters geschaltete Ausgangsstufe bereitgestellt, an der die jeweilige Last angeschlossen ist.

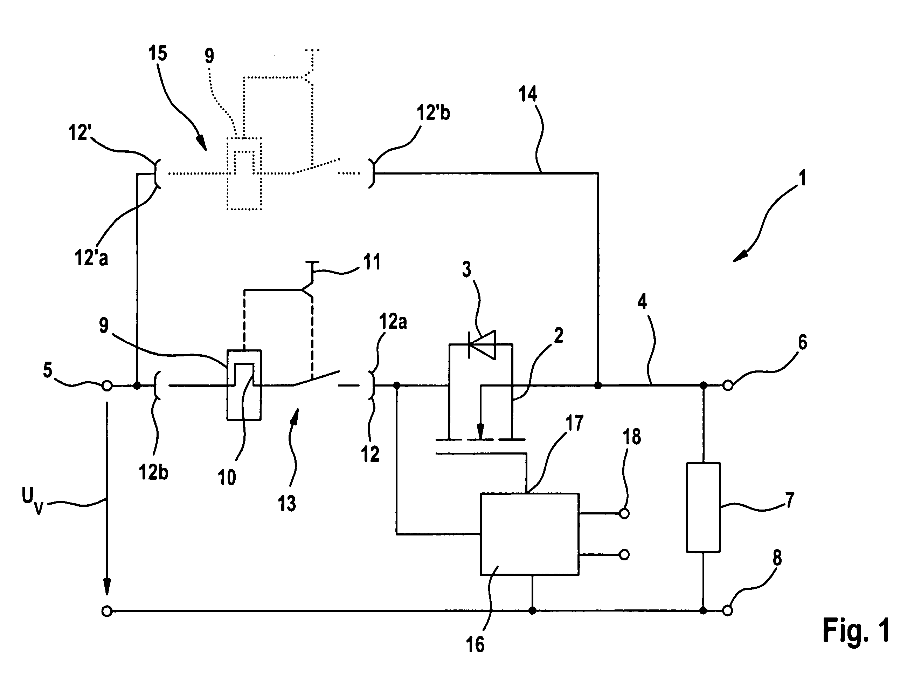

Nachfolgend wird ein Ausführungsbeispiel der Erfindung anhand einer Zeichnung näher erläutert. Darin zeigt die einzige Figur schematisch in einem Blockschaltbild ein Schutzschaltersystem mit einem steuerbaren Leistungsschalter und mit einem umsteckbaren Schutzschalter.

Das Schutzschaltersystem 1 umfasst einen steuerbaren Schalter in Form eines Leistungshalbleiters 2. Dieser ist vorliegend ein MOS-Feldeffekttransistor, der mit einer Freilaufdiode 3 beschaltet ist.

Der Leistungsschalter 2 ist innerhalb eines Strompfades 4 zwischen einen Spannungseingang (LINE) 5 und einen Lastausgang (LOAD) 6 geschaltet. Die Eingangsspannung U_{V} des Schutzschaltersystems liegt im Niedervoltbereich und beträgt beispielsweise 24 V DC oder 48 V DC. Ausgangsseitig ist an den Lastausgang 6 eine Last oder ein Verbraucher 7 gegen Masse (GROUND) 8 geschaltet.

Innerhalb des Strompfades 4 ist im vorliegenden Ausführungsbeispiel dem Leistungsschalter 2 drainseitig ein Schutzschalter 9 vorgeschaltet. Dieser Schutzschalter 9 ist ein beispielsweise aus der DE 198 56 707 A1 oder EP 0 151 692 bekannter thermischer Überstromschutzschalter in Flachsteckerausführung. Angedeutet ist ein Bimetall 10 als thermisches Auslöseelement des Schutzschalters 9. Des Weiteren angedeutet ist eine manuelle Betätigung des Schutzschalters 9 mittels eines Druckknopfes oder Handauslöseelementes 11.

Der Schutzschalter 9 ist in einen Stecksockel 12 eingesteckt, dessen erster Sockelanschluss 12a mit dem Leistungsschalter 2 drainseitig verbunden ist. Der gegenüberliegende zweite Sockelanschluss 12b ist mit dem Spannungseingang 5 des Schutzschaltersystems 1 verbunden. Der Stecksockel 12 bildet eine erste Steckposition 13, in der der Schutzschalter 9 mit dem Leistungsschalter 2 eine Reihenschaltung bildet. In dieser Steckposition 13 schützt der Schutzschalter 9 die Last 7, insbesondere bei defektem oder kurzgeschlossenem Leistungsschalter 2, vor Überlast.

Bei fehlerfrei arbeitendem Leistungsschalter 2 wird dieser vor Überlast durch den Schutzschalter 9 ebenfalls geschützt. Diese Funktion des Überlastschutzes ist auch gewährleistet, wenn diese erste Steckposition 13 zwischen dem Leistungshalbleiter und dem Lastausgang 6 innerhalb des Hauptstrompfades 4 realisiert ist. In diesem Fall ist der Schutzschalter 9 dem Leistungsschalter 2 sourceseitig nachgeschaltet.

Zwischen dem Spannungseingang 5 und dem Lastausgang 6 ist ein Bypass-Strompfad 14 hergestellt, innerhalb dessen eine zweite Steckposition 15 des Schutzschalters 9 realisiert ist. Diese zweite Steckposition 15 ist wiederum durch einen dem ersten Stecksockel 12 entsprechenden Flachsteckersockel 12' gebildet. Dessen einer Sockelanschluss 12'b ist wiederum mit dem Spannungseingang 5 verbunden, während der gegenüberliegende Sockelanschluss 12'a unmittelbar mit dem Lastausgang 6 verbunden ist. Der Bypass-Strompfad 14 liegt somit parallel zu der Reihenschaltung aus dem Leistungsschalter 2 und dem die erste Steckposition 13 bildenden Stecksockel 12.

Der Bypass-Strompfad 14 des Schutzschaltersystems 1 dient als Notfunktion zur Strom- oder Spannungsversorgung der Last 7 für den Fall, dass der Hauptstrompfad 4 infolge eines defekten Leistungshalbleiters 2 unterbrochen ist. Ein derartiger Fehlerfall liegt vor, wenn die Drain-Source-Strecke des Leistungshalbleiters 2 unterbrochen oder isoliert ist. In diesem Fall würde die über den Hauptstrompfad 4 versorgte Last 7 praktisch abgeschaltet.

Um die Last oder den Verbraucher 7 dennoch an die Versorgungsspannung U_{V} zu legen und somit die Stromversorgung der Last 7 zu ermöglichen, wird der Schutzschalter 9 aus der ersten Steckposition 13 in die zweite Steckposition 15 umgesteckt. Die Stromversorgung erfolgt dann über den Bypass-Strompfad 14. Dabei ist ein Überlastschutz des Verbrauchers 7 weiterhin sichergestellt, da der Schutzschalter 9 als thermischer Überstromschutzschalter ausgebildet ist.

Die Steuerung des Leistungsschalter 2 erfolgt mittels einer Steuereinrichtung 16, deren Steuerausgang 17 hierzu mit dem Steuereingang (Gate) des Leistungshalbleiters 2 verbunden ist. Die Steuereinrichtung 16 weist zudem eine BUS-Schnittstelle 18 zur Ankopplung des Schutzschaltersystems 1 an ein BUS-System auf.

Über diese BUS-Schnittstelle oder-Ankopplung 18 kann eine Kommunikation dieses Schutzschaltersystems 1 mit einem übergeordneten Steuer- oder Diagnosesystem erfolgen, indem der Leistungsschalter 2 über ein derartiges BUS-System, beispielsweise anhand einer CAN-BUS-Kommunikation, direkt oder über die Steuereinrichtung 16 entsprechende Steuersignale zum Schalten der Last 7 empfängt und/oder Diagnosedaten, insbesondere im Fehlerfall, an die übergeordnete Steuer- und Diagnose-Einrichtung sendet. Über diese BUS-Schnittstelle 18 kann somit ein Datenaustausch zwischen dem Schutzschaltersystem 1 und der übergeordneten Steuer- bzw. Diagnose-Einrichtung zum Schalten, Schützen und Überwachen der Last 7 sowie zur Fehler- und/oder Status-Meldung erfolgen.

### Bezugszeichenliste

- 1: Schutzschaltersystem
- 2: Schalter
- 3: Freilaufdiode
- 4: Strompfad
- 5: Spannungseingang
- 6: Lastausgang
- 7: Verbraucher
- 8: Masse
- 9: Schutzschalter
- 10: Bimetall
- 11: Handauslöseelementes
- 12: Stecksockel
- 12a: erster Sockelanschluss
- 12b: zweiter Sockelanschluss
- 12': Stecksockel
- 12'a: Sockelanschluss
- 12'b: Sockelanschluss
- 13: erste Steckposition
- 14: Bypass-Strompfad
- 15: zweite Steckposition
- 16: Steuereinrichtung
- 17: Steuerausgang
- 18: Busschnittstelle

- U_{V}: Eingangsspannung

## Patentansprüche

1. Schutzschaltersystem (1) mit einem Schalter (2), insbesondere in Form eines steuerbaren Leistungshalbleiters, der zum Schalten einer Last (7) innerhalb eines Strompfades (4) zwischen einen Spannungseingang (5) und einen Lastausgang (6) geschaltet ist, **gekennzeichnet durch** einen Schutzschalter (9), der zwischen einer mit dem Schalter (2) eine Reihenschaltung bildenden ersten Steckposition (13) und einer mit dem Schalter (2) eine Parallelschaltung bildenden zweiten Steckposition (15) umsteckbar ist.

2. Schutzschaltersystem (1) nach Anspruch 1,
**dadurch gekennzeichnet,**
**dass** ein die erste Steckposition (13) bildender Stecksockel (12) dem Schalter (2) vorgeschaltet ist.

3. Schutzschaltersystem (1) nach Anspruch 1 oder 2,
**dadurch gekennzeichnet,**
**dass** ein die zweite Steckposition (15) bildender Stecksockel (12') parallel zum Schalter (2) zwischen den Spannungseingang (5) und den Lastausgang (6) geschaltet ist.

4. Schutzschaltersystem (1) nach einem der Ansprüche 1 bis 3,
**dadurch gekennzeichnet,**
**dass** der Schalter (2) ein Feldeffekttransistor (FET), insbesondere ein MOS-Feldeffekttransistor (MOSFET), ist.

5. Schutzschaltersystem (1) nach einem der Ansprüche 1 bis 4,
**dadurch gekennzeichnet,**
**dass** der Schutzschalter (9) ein thermischer Überstromschutzschalter ist.

6. Schutzschaltersystem (1) nach einem der Ansprüche 1 bis 5,
**gekennzeichnet durch**
eine Steuereinrichtung (16) zur Ansteuerung des Schalters (2).

7. Schutzschaltersystem (1) nach einem der Ansprüche 1 bis 6,
**gekennzeichnet durch**
eine Busschnittstelle (18) zur Steuerung des Schalters (2) über ein BUS-System.

8. Schutzschaltersystem (1) nach einem der Ansprüche 1 bis 7,
**dadurch gekennzeichnet,**
**dass** der Schutzschalter (9) in der ersten Steckposition (13) als Überlastschutz dient.

9. Schutzschaltersystem (1) nach einem der Ansprüche 1 bis 8,
**dadurch gekennzeichnet,**
**dass** der Schutzschalter (9) in der zweiten Steckposition (15) eine Bypass-Strompfad (14) zum Ein- und Ausschalten der Last (7) bildet.

10. Stromverteilungssystem mit einer Anzahl von Stromkreisen mit jeweils einem Schutzschaltersystem (1) nach einem der Ansprüche 1 bis 9.

## Claims

1. A circuit breaker system (1) having a switch (2), in particular in the form of a controllable power semiconductor, which is connected between a voltage input (5) and a load output (6) for the purpose of switching a load (7) within a current path,
**characterized in**
having a circuit breaker (9), which is interchangeable between a first plug-in position (13) forming a series connection with the switch (2) and a second plug-in position (15) forming a parallel connection with the switch (2).

2. The circuit breaker system (1) according to claim 1,
**characterized in that**
a plug-in socket (12) forming the first plug-in position (13) is connected upstream of the switch (2).

3. The circuit breaker system (1) according to claim 1 or 2,
**characterized in that**
a plug-in socket (12') forming the second plug-in position (15) is connected parallel to the switch (2) between the voltage input (5) and the load output (6).

4. The circuit breaker system (1) according to one of the claims 1 to 3,
**characterized in that**
the switch (2) is a field-effect transistor (FET), in particular an MOS field-effect transistor (MOSFET).

5. The circuit breaker system (1) according to one of the claims 1 to 4,
**characterized in that**
the circuit breaker (9) is a thermal overcurrent circuit breaker.

6. The circuit breaker system (1) according to one of the claims 1 to 5,
**characterized in**
having a control unit (16) for controlling the switch (2).

7. The circuit breaker system (1) according to one of the claims 1 to 6,
**characterized in**
having a bus interface (18) for controlling the switch (2) by a BUS-system.

8. The circuit breaker system (1) according to one of the claims 1 to 7,
**characterized in**
**that** in the first plug-in position (13) the circuit breaker (9) serves as an overload protection.

9. The circuit breaker system (1) according to one of the claims 1 to 8,
**characterized in**
**that** in the second plug-in position (15) the circuit breaker (9) forms a bypass current path (14) for switching the load (7) on and off.

10. Electric current distribution system having a plurality of power circuits, each having a circuit breaker system (1) according to one of the claims 1 to 9.

## Revendications

1. Système disjoncteur (1) comportant un commutateur (2), en particulier sous la forme d'un semi-conducteur de puissance pouvant être commandé, qui est monté à l'intérieur d'un trajet de courant (4) entre une entrée de tension (5) et une sortie de charge (6) pour commuter une charge (7), **caractérisé par** un disjoncteur (9), qui est enfichable entre une première position d'insertion (13) formant un circuit série avec le commutateur (2) et une seconde position d'enfichage (15) formant un circuit parallèle avec le commutateur (2).

2. Système disjoncteur (1) selon la revendication 1, **caractérisé en ce qu'**un socle d'enfichage (12) formant la première position d'enfichage (13) est monté en amont du commutateur (2).

3. Système disjoncteur (1) selon la revendication 1 ou 2, **caractérisé en ce qu'**un socle d'enfichage (12') formant la seconde position d'enfichage (15) est monté parallèlement au commutateur (2) entre l'entrée de tension (5) et la sortie de charge (6).

4. Système disjoncteur (1) selon l'une des revendications 1 à 3, **caractérisé en ce que** le commutateur (2) est un transistor à effet de champ (FET), en particulier un transistor à effet de champ MOS (MOSFET).

5. Système disjoncteur (1) selon l'une des revendications 1 à 4, **caractérisé en ce que** le disjoncteur (9) est un disjoncteur à maximum thermique.

6. Système disjoncteur (1) selon l'une des revendications 1 à 5, **caractérisé par** un circuit de commande (16) pour commander le commutateur (2).

7. Système disjoncteur (1) selon l'une des revendications 1 à 6, **caractérisé par** une interface de bus (18) pour commander le commutateur (2) par l'intermédiaire d'un système de bus.

8. Système disjoncteur (1) selon l'une des revendications 1 à 7, **caractérisé en ce que** le disjoncteur (9) est utilisé en tant que protection contre les surcharges dans la première position d'enfichage (13).

9. Système disjoncteur (1) selon l'une des revendications 1 à 8, **caractérisé en ce que** le disjoncteur (9) forme, dans la seconde position d'enfichage (15), un trajet de courant de dérivation (14) pour allumer et couper la charge (7).

10. Système de distribution de courant comportant une pluralité de circuits électriques comportant respectivement un système disjoncteur (1) selon l'une des revendications 1 à 9.
